# EUROPEAN PATENT SPECIFICATION

(11) **EP 0 571 914 B1**
(45) Date of publication and mention of the grant of the patent: **21.08.1996**
(21) Application number: 93108346.3
(22) Date of filing: 24.05.1993
(51) Int. Cl.: B23K 26/00, C04B 41/00

(54) **Method to work cubic boron nitride article**
Verfahren zum Bearbeiten eines Werkstücks aus kubischem Bornitrid
Méthode d'usinage d'un article de nitrure de bore cubique

(30) Priority: 26.05.1992 JP 133299/92
(43) Date of publication of application: 01.12.1993
(73) Proprietor: SUMITOMO ELECTRIC INDUSTRIES, LTD, Osaka-shi, Osaka-fu 541 (JP)
(72) Inventor: Ota, Nobuhiro, c/o Itami Works of Sumitomo, Itami-shi, Hyogo-ken (JP); Fujimori, Naoji, c/o Itami Works of Sumitomo, Itami-shi, Hyogo-ken (JP)
(74) Representative: Lehn, Werner, Dipl.-Ing.

(56) References cited:
- DE-A- 4 119 878
- US-A- 5 096 740
- US-E- 33 777
- PATENT ABSTRACTS OF JAPAN vol. 14, no. 428 (M-1025)(4371) 14 September 1990 & JP-A-21 69 192 (DENKI KAGAKU KOGYO K.K.) 29 June 1990
- PATENT ABSTRACTS OF JAPAN vol. 10, no. 49 (C-330)26 February 1986 & JP-A-60 194 066 (GIJUTSUIN) 2 October 1985

## Description

### BACKGROUND OF THE INVENTION

### Field of the Invention

The present invention relates to a method to work an article at least a portion of which is made of cubic boron nitride (hereinafter, often referred to as a cubic boron nitride article) in which cutting of such an article and/or smoothing of a surface of such an article is carried out effectively with high accuracy. Generally, the cubic boron nitride article is used for the production of a tool, a heat sink and the like.

### Description of the Related Art

Generally, cubic boron nitride has a large hardness, and thus, it is extremely difficult to work an article essentially made of or comprising the cubic boron nitride. In the case in which the cubic boron nitride is of a single crystal, the article thereof has been conventionally worked by abrasion grinding only within a limited field since a plane orientation or a plane direction along which the working is relatively easy may be grasped. However, when the boron nitride is of a polycrystal, smoothing of a surface of the article is difficult since the plane orientation of each grain which constitutes the polycrystal is arbitrary.

In order to cut the cubic boron nitride article, an electrical discharge working method can be used if the article has been produced by sintering an article comprising a conductive sintering aid. However, the method is not applicable to the cubic boron nitride article made of the single crystal or a non-conductive cubic boron nitride article due to, for example, the absence of conductive sintering aid. Therefore, a thermally cutting method using a laser beam has been conventionally used. As the laser, CO₂, CO or YAG laser is used. Since the cubic boron nitride is transparent to each of these laser beams, utilization of the laser beam is worse. That is, there is a disadvantage that the working of the article made of the cubic boron nitride is not carried out effectively.

When the article is heated and cut using an infrared ray of which wavelength is above 1 µm, a hexagonal crystal phase of the cubic boron nitride is generated which is a thermally equilibrium phase and the phase thus produced prevents the cutting and/or contaminates the cut surface. In addition, a vicinity region around the cut region is degraded by heat from the infrared ray. Further, since a cutting margin is required to be relatively wide, working accuracy becomes worse.

When the cubic boron nitride article is conventionally cut using the laser beam, the cubic boron nitride is also degraded around the vicinity region of the cut region due to the heat of the laser beam. Then, the degraded region should be mechanically scraped off by, for example, abrasion. When the laser beam is used for smoothing the surface of the cubic boron nitride article, there is, in addition to the thermal degradation of the vicinity region, another disadvantage that the laser beam reaches an inside and/or a base portion of the article which are not required to be worked, which adversely affects the article. In order to avoid such a disadvantage, an angle of incidence of the laser beam should be limited so as to only a surface layer of the article is irradiated. Alternatively, there is required a means to suppress scattering of the laser beam at the surface of the article.

JP-A-2-169192 discloses a method for cutting a sintered body of cubic boron nitride by applying a laser absorbent on a laser irradiation surface. The absorbent consists of carbon or boron carbide and increases the absorption efficiency.

When the article is ground with the abrasion, the cubic boron nitride article is heated to several hundred degrees Centigrade (for example, to 900 °C), and thus adverse effects are caused inevitably in the article. It is known that the cubic boron nitride begins to transform to the hexagonal crystal and boron oxides above one thousand degrees Centigrade (for example, at 1000 °C) in the air.

With the abrasion, there is another problem that fixing of the article is difficult. Namely, when the cubic boron nitride article is too small or irregular in its shape like as a small grain of the single crystal or an abrasion grain, the abrasion becomes extremely difficult and thus workability gets worse. In some cases, it is impossible to work the article. In addition, there is a further problem that the working with the abrasion takes time.

### SUMMARY OF THE INVENTION

It is, therefore, an object of the present invention to provide a process to work a cubic boron nitride article without adversely affecting the article in which the article is cut or a surface of the article is smoothed so that a working speed is increased.

According to the present invention, there is provided a method to cut, smooth or etch an article, at least a portion of which is made of cubic boron nitride in which a beam having a wavelength of not longer than 360 nm, preferably in a range of 190 to 360 nm, and more preferably 190 to 310 nm (for example 308 nm of XeCl excimer laser, 248 nm of KrF excimer laser and 193 nm of ArF excimer laser) is irradiated to cubic boron material of the article. The term "cubic boron nitride article" used in this description is intended to mean an article which is made essentially of cubic boron nitride or an article which comprises the cubic boron nitride. Namely, at least a portion of the article is made of the cubic boron nitride.

An energy density of the beam is preferably in a range of 10 W/cm² to 10¹¹ W/cm² and more preferably 10² W/cm² to 10⁴ W/cm². The beam is preferably irradiated using a laser, for example, an excimer laser and the laser is preferably of a type of a pulsed laser. When the pulsed laser is used, a energy density of the laser beam per pulse is preferably in a range of 10⁻¹ J/cm² to 10⁶ J/cm² and preferably 1 J/cm² to 10² J/cm² for a good result of the article working.

A laser apparatus is so constructed that a diverging angle of the beam emitted from a laser oscillator is in a range of 10⁻³ mrad to 5 mrad and preferably 10⁻² mrad to 5x10⁻¹ mrad, and a full width at half maximum of an oscillating spectrum of the laser beam is in a range of 10⁻⁴ nm to 1 nm and preferably 10⁻⁴ nm to 10⁻² nm. A beam energy uniformity of a section which is perpendicular to the laser beam is preferably within a range below 10 % and preferably below 7 %. In order to have better working results, the pulsed laser beam is converged using a cylindrical lens or a cylindrical mirror or combination thereof.

### DETAILED DESCRIPTION OF THE INVENTION

It is known that a large amount of beam is absorbed by the cubic boron nitride when a wavelength of the beam is shorter than that of an ultraviolet beam, and when such a beam is absorbed by the nitride, it contributes to excitation of an electron forming a chemical bonding.

That is, it is conceived that some effect may be provided to a nitrogen-boron bondings which constitute the cubic boron nitride by irradiation of the beam having a wavelength below 360 nm, whereby some change in the bondings can be caused. However, it has been highly inconceivable from view points of those skilled in the art to work an article such as a cubic boron nitride article which is constructed firmly and three dimensionally with covalent bondings by means of the ultraviolet beam rather than the use of the thermal effect.

The inventors have made intensive studies on a reaction of the cubic boron nitride with a beam and found that the cubic boron nitride article is effectively worked by the beam having a wavelength below 360 nm with no damage to the article. In addition, it has been also found that when such a beam is used, a sintering aid contained in an article which is produced by sintering the cubic boron nitride article with the aid is not changed and a surface of the article is not contaminated by the sintering aid so that the working is not disturbed, whereby the working with high accuracy is possible. In particular, it has been found that the beam having a wavelength in a range of 190 nm to 360 nm is useful for the working of the cubic boron nitride article. The beam having a wavelength specified above is absorbed only by the surface layer of the cubic boron nitride article by almost 100 % and it, thus, does not invade the inside of the article.

Therefore, energy of the beam is properly concentrated on a region which should be worked, whereby effective and fast working is possible. When a surface of the cubic boron nitride article is to be smoothed, the beam energy is concentrated only on the surface larger and thus, dependency on the incidence angle of the beam is suppressed with preventing any effect to the other portions of the article.

As an example of a source of the beam, an excimer laser of F₂, ArF, KrCl, KrF, XeCl, N₂ or XeF, a mercury vapor lamp or synchrotron radiation (SOR) may be used for the working method of the present invention, but it is not limited to these sources. Each excimer laser has an inherent oscillating beam wavelength of 157, 193, 222, 248, 308, 337 and 353 nm, respectively. The mercury vapor lamp and the synchrotron radiation each provides a beam having a consecutive wavelength band (band width). It is also possible to irradiate the beam having such a consecutive band width. Alternatively, the consecutive band width may be narrowed by means of an optical filter and the like.

Generally, the beam emitted from the source as described above is not parallel and freely diverges within a certain flare range. Thus, when the beam is converged by means of a lens, there is formed a portion having a less energy density in a periphery region of the converged beam, which causes a problem of worse working accuracy. For the smoothing of the article surface, scanning of the article with respect to the beam suppresses the problem. However, when so converged beam is used for the cutting of the article, a cutting edge becomes blunted a little. Although such a defect may not cause a serious problem for a normal application, forming a parallel beam is required for precise working in the order of sub-micron.

As a manner in which the beam emitted from the excimer laser is parallelized and its band width is narrowed, oscillation with an unstable resonator, or narrowing a band width of an original beam with an etalon or a prism and a grating and amplifying the beam thus narrowed may be used. By reducing a diverging angle of the laser beam from the laser oscillator to less than 5x10⁻¹ mrad from the usual about 1-3 mrad, the converging effect of the beam with the lens can be improved, so that an angle formed between a cut surface and the other intact surface of the cubic boron nitride article is made sharp, which is effective for smoothness of the cut surface. It is difficult to reduce the diverging angle to less than 10⁻² mrad, and also a highly improved effect on the working corresponding to such a small angle cannot be expected.

In addition, when a super-precise working in the order of 0.1 µm or less is required, the narrowing of the band width of the beam is useful. As a manner by which the band width of the beam is narrowed, there are, for example, the etalon using method or the prism and grating using method. As to an extent of narrowing of the band width of the oscillated beam, a full width at half maximum of the beam spectrum is preferably required to be within a range of 10⁻⁴ nm to 1 nm and more preferably 10⁻³ nm to 10⁻² nm. The full width of half maximum above 1 nm is not sufficiently narrowed for the purpose of the precise working. The width below 10⁻⁴ nm does not provide sufficient energy for the working.

In a process in which the beam is converged and irradiated to the surface of the cubic boron nitride article, a lens and/or a total reflection mirror are used. As to the lens or the mirror, a convex lens or a concave mirror or combination thereof may be used which converges the beam on a point. When the beam is converged on a line, a cylindrical convex lens or a cylindrical concave mirror or combination thereof may be used. In addition, a concave lens or a convex mirror or combination thereof can provide a parallel or almost parallel beam which has a small diverging angle. The energy density of the irradiated beam is controlled by an extent of the converged state of the beam.

When the working of the cubic boron nitride article is carried out, the beam can be scanned. However, when the article is plane-like, sliding the article leads to the more precise working of the article. When an article surface having a three dimensional configuration is to be smoothed, both of the article and the beam should be moved relatively. When the article is cut, the beam irradiation perpendicular to the surface to be cut is effective from view points of the energy density and the perpendicularity of the cut surface. The smoothing the surface depends on an angle at which the beam is irradiated.

Depending on the relationship between the energy density and the irradiation region (i. e. the worked area), optimal conditions may be selected variously for each application. The energy density may be adjusted by changing a focal length of the convex lens or the concave mirror and/or a positional relationship between the article and the lens or the mirror. When the energy density is less than 10⁻¹ J/cm² or less than 10 W/cm², the energy is not sufficient for decomposition of the cubic boron nitride. When the energy density is greater than 10⁶ J/cm² or greater than 10¹¹ W/cm², a region rather than the region to be worked of the cubic boron nitride article is adversely affected, for example, degraded.

Generally, a cross sectional area which is perpendicular to the excimer laser beam has a rectangular shape of about 10 mm x 20 mm and energy profile across the sectional area of the beam is not uniform but has a certain distribution. The energy distribution is of such a gentle convex configuration that the energy density is low in a peripheral region of the rectangular and is gently increased toward a central region, which means that the energy density has non-uniformity. Use of the beam having the non-uniformity of the energy density provides convex and concave portions on the surface of the worked article, the worse accuracy of the working being caused. Thus, even when the beam is converged using the lens, the beam still keeps the non-uniformity of the energy density, causing a nonuniform worked surface.

However, it has been found that when the beam having the non-uniformity of the energy density is converged on a line by using the cylindrical lens and then the converged beam is irradiated to the cubic boron nitride article, the article is worked with a high speed such that the surface thereof is uniformly smoothed or it is highly accurately cut. The reason why such an improvement is provided is not clarified. Although not bound by any theory, it is possible that conditions under which the above problems may be canceled are formed by converging the beam in one direction.

Depending on the conditions of the excimer laser, the line-converged beam may provide non-uniformity in both end portions of the worked surface. In such a case, both end portions of the line beam are stopped so that the more uniformly worked surface is provided. In addition, it has been found that when the scattering of the energy density distribution across the section of the laser beam is reduced to less than 10 %, almost no adverse effect is caused to the working accuracy. In order to make the energy density distribution uniform, a homogenizer may be used, or only the central portion may be cut out from the beam by using a masking means in which the energy density distribution is relatively uniform.

It has been also found that the working of the cubic boron nitride article depends on a atmosphere in which the working is carried out. When the excimer laser of ArF is used, an inert atmosphere, for example, an atmosphere comprising at least one inert gas such as helium or argon or a vacuum atmosphere is suitable so as to prevent energy damping due to the absorption by oxygen. When the other beam having a wavelength greater than that of the ArF excimer laser beam is used, the inert atmosphere such as a helium atmosphere is preferred. Since the F₂ excimer laser or SOR emits a vacuum ultraviolet beam, the working should be carried out in a high vacuum condition with converging the beam using the total reflection mirror.

When the pulsed laser is used, a working rate is proportionally increased with a frequency of the pulse, and thus, it is preferred that the laser oscillator is used which provides the pulsed laser beam at a high frequency. In addition, the higher the energy density is, the faster an etching rate is. Thus, an apparatus which can provide a high energy beam is suitable for the cutting.

The present invention provides the effective method to work the article made of the cubic boron nitride with the high accuracy. The present method extends the application of the boron nitride into the field where the cubic boron nitride article has not been worked or otherwise the working of the article has cost uneconomically since the article is very hard and has less heat resistance. In addition, the present invention provides a three dimensional working method of the cubic boron nitride article with high accuracy as described in detail in below Examples.

### EXAMPLES

### Example 1

An article made essentially of a cubic boron nitride single crystal produced by the ultra-high pressure synthesizing process was cut using an excimer laser. The article was in the form of a particle of 1 mm x 1 mm x 500 µm (thickness). A pulsed ArF laser apparatus was used as the excimer laser. The beam from the laser was narrowed in its band width through a prism and a grating, and an unstable resonator was positioned on an amplifying side of the laser apparatus so as to improve the parallelism of the beam, so that the band width of the beam having a oscillating wavelength of 193 mn was narrowed such that a full width of the half maximum was 5/1000 nm. The beam was converged on a 10 µm x 10 µm square in its section with combination of a convex lens and a concave lens each made of a synthesized quartz and irradiated to a surface to be worked of the boron nitride article in the air.

The energy density of the beam was 10⁵ J/cm². The repeating frequency of the pulse was set to 200 Hz. The irradiating angle was set such that the beam was irradiated parallel to a normal of the surface to be worked of the cubic boron nitride article. The article was moved perpendicularly to the laser beam such that it was moved over a length of 1 mm at a rate of 0.1 mm/sec. Thus, it took ten seconds to cut the article. When the resulted cut surface was checked using an electron microscope, no morphology change was observed in the periphery region of the cut surface. In addition, the cut surface itself was extremely smooth on which no formed hexagonal crystal phase was observed.

### Example 2

An article made essentially of the cubic boron nitride single crystal produced by the ultra-high pressure synthesizing process was cut using an excimer laser. The article was in the form of a particle of 2 mm x 2 mm x 2 mm (thickness). A pulsed ArF laser was used as the excimer laser. The beam from the laser was converged on a 2 mm x 10 µm rectangular in its section using a cylindrical convex lens made of the synthesized quartz and irradiated to the article to be cut in a helium gas flow. The energy density of the beam was 10⁴ J/cm². The repeating frequency of the pulse was set to 250 Hz.

The irradiating angle was set such that the beam was irradiated parallel to a normal of the surface of the cubic boron nitride article. The article having a thickness of 2 mm was cut in 30 seconds. When the cut surface was observed using the electron microscope, no morphology change was observed in the periphery region of the cut surface. In addition, the cut surface itself was extremely smooth on which no formed hexagonal crystal phase was observed.

### Example 3

A surface of a sintered article in the form of a plate made of cubic boron nitride comprising calcium boron nitride as the sintering aid was smoothed using an excimer laser. The sintered article was produced under a high pressure and a high temperature conditions. The article was in the form of a plate of 50 mm x 50 mm x 5 mm (thickness). The surface was relatively rough. Concretely, its roughness was 1.0 µm of Ra measured by a surface roughness meter using a stylus ("DEKTAK®" commercially available from Sloan Co. in U. S. A.). As the excimer laser, a pulsed XeF laser was used. On the amplifying side of the laser apparatus, an instable resonator was positioned, so that the parallelism of the beam was highly improved and the scattering of the energy distribution was not greater than 9 % with the use of a homogenizer.

The beam from the laser was converged on a 25 mm x 50 µm rectangular in its section using a cylindrical convex lens and a cylindrical concave lens each made of the synthesized quartz glass and irradiated to the article surface to be smoothed in the air. The energy density of the beam was 10² J/cm². The repeating frequency of the pulse was set to 200 Hz. The irradiating angle was set such that it was parallel to a normal of the surface to be smoothed of the cubic boron nitride article. The article was moved perpendicularly to the laser beam. Practically, the article was scanned forth and back over one half of the width of 50 mm (i.e. 25 mm) at a scanning rate of 5 mm/sec. This scanning was repeated five times and it thus took 50 seconds totally. In addition, the other half was also scanned to be smoothed in the same manner.

According to the electron microscope observation, the resulted surface had almost no roughness. Concretely, its roughness was 0.15 µm of Ra. In addition, the worked surface had no hexagonal crystal phase thereon.

### Example 4

A sintered article made of cubic boron nitride and a sintering aid of calcium boron nitride was cut using an excimer laser. The article was produced in the similar manner to that of Example 3 and in the form of a plate of 50 mm x 50 mm x 5 mm (thickness). As the excimer laser, a pulsed ArF laser was used. On the amplifying side of the laser apparatus, the instable resonator was positioned, so that the parallelism of the beam was highly improved. The scattering of the energy density distribution was not greater than 9 % using the homogenizer.

The beam from the laser was converged on a 25 mm x 50 µm rectangular in its section using combination of a cylindrical convex lens and a cylindrical concave lens each made of the synthesized quartz and irradiated to the article to be worked in a helium flow. The energy density of the beam was 10³ J/cm². The repeating frequency of the pulse was set to 250 Hz. The irradiating angle was set such that it was parallel to a normal of the surface to be worked of the cubic boron nitride article. The article was moved perpendicularly to the laser beam. On the cutting over a length of 50 mm, the beam was irradiated over a half of 50 mm for 180 seconds, and then the beam was shifted so that the rest of the 50 mm (i.e. remaining 25 mm) was also irradiated. Thus, the article was cut in 360 seconds totally.

According to the electron microscope observation, the cut surface was smooth and no hexagonal crystal phase was observed thereon. In addition, no degradation of the sintering aid and contamination due to the presence of the aid itself were observed.

### Example 5

A sintered article was worked using an excimer laser. The article was produced by sintering cubic boron nitride produced by the ultra-high pressure synthesizing process and a sintering aid of magnesium boron nitride. The article was in the form of a disc having a thickness of 5 mm and a diameter of 50 mm. A pulsed KrF laser emitting a beam having a wavelength of 248 nm was used as the excimer laser. The beam from the laser was converged to a 25 mm x 500 µm rectangular in its section using a cylindrical convex lens and a cylindrical concave lens each made of the synthesized quartz and irradiated to the article surface to be worked while a helium gas was sprayed on the surface of the article. The energy density of the beam was 10 J/cm². The repeating frequency of the pulse was set to 80 Hz.

The irradiation angle was set such that the beam and a normal of the surface of the article forms an angle of 75°. In addition, the article was gradually inclined with respect to the beam in order that a beam width was increased toward the center of the article surface, whereby the energy density of the beam was decreased toward the center so that the energy density across the irradiated surface became uniform as a whole. The article was worked while it was turned on a turntable by three turn at a turning rate of 0.1 rpm. After the working, the thickness of the article was measured and found that the thickness was uniformly decreased by 100 µm. The roughness of the surface (Ra) was measured by the surface roughness meter using the stylus and found to be 0.1 µm of Ra.

### Example 6

A plane (1 1 1) of a cubic boron nitride single crystal was worked using an excimer laser. The single crystal was in the form of a hexa-octahedron having an edge of about 2 mm. As the laser, a pulsed KrF excimer laser was used. The beam from the laser was converged on a 2 mm x 10 µm rectangular in its section using a convex lens made of the synthesized quartz with the mask projection technique using a slit means. The converged laser beam was irradiated to the surface of the cubic boron nitride crystal in a helium gas flow. The energy density of the beam was 53 J/cm². The repeating frequency of the pulse was set to 100 Hz.

The irradiation angle was set such that the beam is perpendicular to a normal of the surface to be worked. The crystal was so moved using a numerically controlled driving mechanism that a flank and a rake face each corresponded to the (1 1 1) surface, and the beam was irradiated to the flank perpendicularly from a side surface direction thereof to have an edge portion having a radius of 3 mm. It took 12 minutes for the working. According to SEM (scanning electron microscope) observation, the edge was extremely sharp and no thermally degraded portion was detected.

### Example 7

A (1 1 1) plane of a cubic boron nitride single crystal was worked using a excimer laser. The single crystal was in the form of a hexa-octahedron having an edge of about 2 mm. As the laser, a pulsed KrF excimer laser was used. The beam from the laser was converged on a 2 mm x 10 µm rectangular in its section using a convex lens made of the synthesized quartz with the mask projection technique using the slit means. The converged laser beam was irradiated to the surface of the cubic boron nitride crystal while an air was sprayed to the surface with a compressor. The spraying rate of the air was 50 m/sec. The energy density of the beam was 53 J/cm². The repeating frequency of the pulse was set to 100 Hz. The irradiation angle was set such that the beam is perpendicular to a normal of the surface. The crystal was so moved using the numerically controlled driving mechanism that a flank corresponded to the (1 1 1) plane, and the beam was irradiated to the flank perpendicularly to have a cutting edge portion having a radius of 3 mm. It took 12 minutes for the working. According to the SEM observation, the edge was extremely sharp and no thermally degraded portion was detected.

### Comparative Example 1

By using a mechanical abrasion process (skiving abrasion), a (1 1 1) plane of the cubic boron nitride single crystal was worked. The single crystal was in the form of a hexa-octahedron having an edge of about 2 mm. While a skiving face is abutted to the (1 1 1) plane, a cutting edge portion having a radius of 4 mm was so formed that a flank corresponded to the (1 1 1) plane. It took 45 minutes for forming the cutting edge portion. According to the SEM observation, the edge portion was blunted a little and some thermally degraded portions were observed.

### Comparative Example 2

A sintered article comprising cubic boron nitride produced by the ultra-high pressure synthesizing process and calcium boron nitride as the sintering aid was cut using a whetstone made of a metal bonded diamond. The article was in the form of a disc having a diameter of 50 mm and a thickness of 5 mm. It took 50 hours to scrape off a surface layer having a thickness of 100 µm from the article. When the roughness of the surface was measured by a roughness meter, waviness having a maximum roughness (Rmax) of about 5 µm was observed, which seemed to be caused by deformation of the worked article.

## Claims

1. A method to cut, smooth or etch an article, at least a portion of which is made of cubic boron nitride, comprising irradiating a beam on cubic boron nitride material of the article characterized in that the beam has a wavelength of not greater than 360 nm.

2. The method according to claim 1 wherein the wavelength is not smaller than 190 nm.

3. The method according to claim 1 wherein an energy density of the beam is in a range of 10 W/cm² to 10¹¹ W/cm².

4. The method according to claim 1 wherein the beam is emitted from a pulsed laser.

5. The method according to claim 4 wherein an energy density per pulse is in a range of 10⁻¹ J/cm² to 10⁶ J/cm².

6. The method according to claim 4 wherein a diverging angle of the beam emitted from a laser oscillator is in a range of 10⁻² mrad (milli-radian) to 5 x 10⁻¹ mrad.

7. The method according to claim 4 wherein a full width of half maximum of an oscillating spectrum of the laser beam is in a range of 10⁻⁴ nm to 1 nm.

8. The method according to claim 4 wherein a scattering extent of an energy density across a cross section of the beam is not greater than 10 %.

9. The method according to claim 4 wherein the beam is converged using at least one of a cylindrical lens and a cylindrical mirror.

## Patentansprüche

1. Verfahren zum Schneiden, Glätten oder Ätzen eines Gegenstands, der zumindest teilweise aus kubischem Bornitrid besteht, umfassend das Strahlen eines Strahls auf das Material aus kubischem Bornitrid auf dem Gegenstand, dadurch gekennzeichnet, daß der Strahl eine Wellenlänge nicht größer als 360 nm hat.

2. Verfahren nach Anspruch 1, dadurch gekennzeichnet, daß die Wellenlänge nicht kleiner als 190 nm ist.

3. Verfahren nach Anspruch 1, dadurch gekennzeichnet, daß eine Energiedichte des Strahls in einem Bereich von 10 W/cm² bis 10¹¹ W/cm² ist.

4. Verfahren nach Anspruch 1, dadurch gekennzeichnet, daß der Strahl von einem gepulsten Laser abgegeben wird.

5. Verfahren nach Anspruch 4, dadurch gekennzeichnet, daß eine Energie pro Puls in einem Bereich von 10⁻¹ J/cm² bis 10⁶ J/cm² liegt.

6. Verfahren nach Anspruch 4, dadurch gekennzeichnet, daß ein Divergenzwinkel des von einem Laseroszillator ausgestrahlten Strahls in einem Bereich von 10⁻² mrad (Milliradian) bis 5 x 10⁻¹ mrad liegt.

7. Verfahren nach Anspruch 4, dadurch gekennzeichnet, daß eine Vollbreite des Halbmaximums eines Oszillationsspektrums des Laserstrahls in einem Bereich von 10⁻⁴ nm bis 1 nm ist.

8. Verfahren nach Anspruch 4, dadurch gekennzeichnet, daß ein Streugrad einer Energiedichte entlang eines Querschnitts des Strahls nicht größer als 10% ist.

9. Verfahren nach Anspruch 4, dadurch gekennzeichnet, daß der Strahl unter Verwendung einer zylindrischen Linse und/oder eines zylindrischen Spiegels konvergiert wird.

## Revendications

1. Procédé de coupe, de polissage ou d'attaque d'un article dont une partie au moins est formée de nitrure de bore cubique, comprenant la projection d'un faisceau sur le matériau de nitrure de bore cubique de l'article, caractérisé en ce que le faisceau a une longueur d'onde qui ne dépasse pas 360 nm.

2. Procédé selon la revendication 1, dans lequel la longueur d'onde n'est pas inférieure à 190 nm.

3. Procédé selon la revendication 1, dans lequel la densité d'énergie du faisceau est comprise entre 10 et 10¹¹ W/cm².

4. Procédé selon la revendication 1, dans lequel le faisceau est émis par un laser pulsé.

5. Procédé selon la revendication 4, dans lequel la densité d'énergie par impulsion est comprise entre 10⁻¹ et 10⁶ J/cm².

6. Procédé selon la revendication 4, dans lequel l'angle de divergence du faisceau émis par un oscillateur laser est compris entre 10⁻² et 5.10⁻¹ mrad.

7. Procédé selon la revendication 4, dans lequel la largeur totale à la moitié du maximum du spectre d'oscillation du faisceau laser est comprise entre 10⁻⁴ et 1 nm.

8. Procédé selon la revendication 4, dans lequel l'amplitude de dispersion de la densité d'énergie dans une section du faisceau ne dépasse pas 10 %.

9. Procédé selon la revendication 4, dans lequel le faisceau converge à l'aide d'au moins une lentille cylindrique et un miroir cylindrique.
